(19) **Europäisches Patentamt / European Patent Office / Office européen des brevets**

(11) **EP 2 144 432 A1**

(12) **EUROPEAN PATENT APPLICATION**

(43) Date of publication:
**13.01.2010 Bulletin 2010/02**

(51) Int Cl.:
**H04N 1/64** (2006.01)

(21) Application number: **08012330.0**

(22) Date of filing: **08.07.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Panasonic Corporation**<br>**Kadoma-shi**<br>**Osaka 571-8501 (JP)** | (72) Inventors:<br>• **Narroschke, Matthias, Dr.**<br>**63225 Langen (DE)**<br>• **Wedi, Thomas, Dr.**<br>**63225 Langen (DE)**<br><br>(74) Representative: **Grünecker, Kinkeldey,**<br>**Stockmair & Schwanhäusser**<br>**Anwaltssozietät**<br>**Leopoldstrasse 4**<br>**80802 München (DE)** |

(54) **Adaptive color format conversion and deconversion**

(57)     The present invention relates to a color format conversion and deconversion. The color format conversion converts a color image from a first color format to another color format. Furthermore, color format deconversion coefficients are determined and the determined color format deconversion coefficients are provided together with the converted image data. The color format deconversion deconverts the converted image data obtained together with the color format deconversion coefficients, using the color format deconversion coefficients.

## Fig. 3

EP 2 144 432 A1

**Description**

The present invention relates to a conversion and deconversion of a color image consisting of plural color components and to a corresponding apparatus.

BACKGROUND OF THE INVENTION

Digital video or image cameras for capturing color images comprise a sensor capable of capturing the intensity of light filtered through different color filters. Such a sensor can be overlaid with a so-called Bayer filter consisting of a mosaic of red, blue and green filters in alternating rows of red and green, and green and blue. The prevalence of the green filter reflects the higher sensitivity of the human eye to the green color than to the red and blue colors. The mosaic of captured color samples is typically converted in a different color space that can be more efficiently stored and rendered on the display. This conversion is referred to as "demosaicing". Usually, the mosaic of red, green, and blue samples is converted to an RGB color space, which also consists of red (R), green (G), and blue (B) samples.

A color image in RGB color space (an RGB image) consists of so-called pixels, each pixel consisting of three color components, namely red, green, and blue. The value of each component defines the intensity of the red, green, and blue light necessary to reproduce the color of the pixel. Pixel is the smallest formation part of an image. Color components of each RGB image pixel can be seen as coordinates $(r,g,b)$ of this pixel within the RGB color space. The values of these coordinates are quantized using $q$ bits, wherein the number of bits per pixel is also known as color depth. In present applications usually the value of $q = 8$ or $q = 16$ is applied equally for all color components resulting in color depth of 24 or 48 bits, respectively. In general, different color components and even different pixels might also be quantized using different number of bits.

The pixels in an RGB image are organized in a matrix of a size $N \times M$, which is also called (spatial) resolution of the image. If $N$ and $M$ are the same for all three color components, i.e. if the values of image color components can be organized in three equally sized color components - matrices, the color format of such image is referred to as RGB 4:4:4. There are also sensors capable of directly capturing the data in the RGB 4:4:4 color format. In general, color components of a single image may have different sizes, resulting from different sampling grids applied to each of them. The values of image color components can be used for instance, to render the image on a display screen, to store the image in a camera or in an external storage, to print the image, to process it further, or to transmit it over a transmission channel.

The further processing may include, for instance, a color format conversion comprising transformation into a different color space and/or subsampling of selected color components. Before subsampling, filtering may be applied.

For transmission and storing purposes, the color images in a predetermined color format, or a sequences of such color images forming a video, are typically further encoded using a standardized or a proprietary image or video encoder. The encoding is performed in order to reduce the amount of data necessary to store or transmit the image or video. Such encoding may employ various lossless and/or lossy compression mechanisms either standardized or proprietary.

In order to render the encoded image or video on a display, the image data has to be received from the channel or retrieved from the storage and decoded. Decoding applies the operations inverse to the encoding operations and results in an image in the color format used for the encoding. Today's displays typically use signals derived from RGB 4:4:4 color format values to control the driving of the display pixels. Thus, a conversion to this color format may be necessary after decoding. The color format deconversion after decoding may include upsampling of the subsampled color image if subsampling has been applied. The upsampling is typically performed using an interpolation filter.

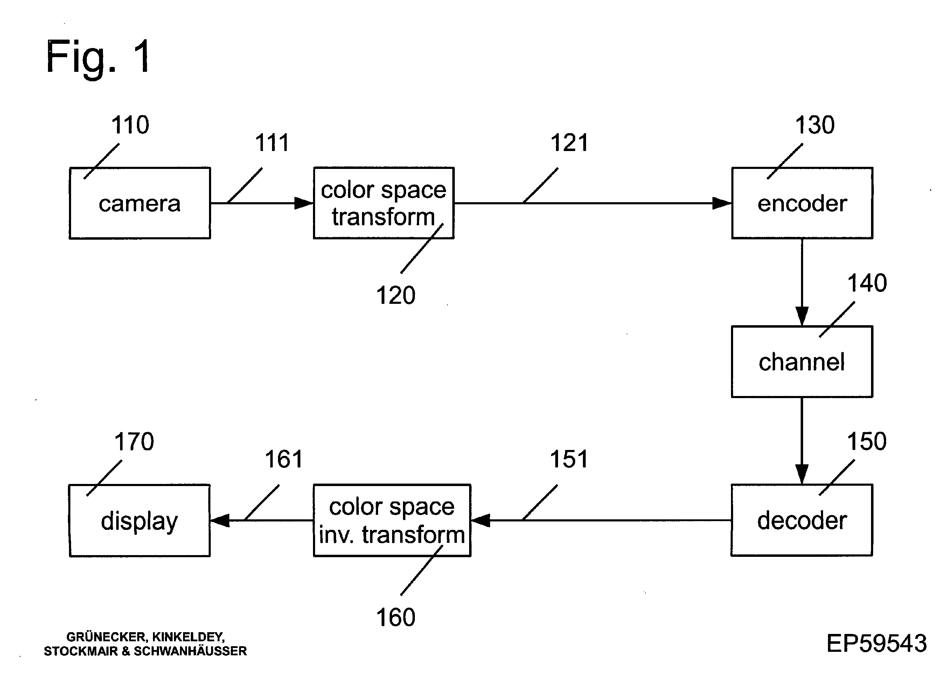

Figure 1 illustrates an example of a video transmission chain according to state of the art.

A video camera or still image camera 110 captures a real scene and delivers original color image 111 in a first color format, in particular, in the RGB 4:4:4 color format with 8 bits per color sample. The RGB 4:4:4 image 111 is further converted into another color space, in this case, into a color space using color difference components such as YUV color space. In this color space, the input color image is divided into a luminance, denoted as Y, and into two color differences (chrominance) components, denoted as U and V. To obtain the data in YUV color space, the color space transformation 120 is applied. Accordingly, the weighted values of R, G and B are added together to produce a single Y signal representing the overall brightness or luminance of the corresponding pixel. The U signal is then created by subtracting a Y from the blue signal of the original RGB and a scaling operation. The V signal is correspondingly created by subtracting Y from the red and then scaling by a different factor. The thus obtained image in YUV color space comprises the luminance component corresponding to the intensities of the captured image and two chrominance components which are typically considerably smoother than the luminance component. The smoothness of the chrominance images enables a better compression thereof.

The image 121 in the YUV color space has still the same size as the original RGB 4:4:4 image 111, i.e. for each pixel three 8-bit values of luminance and two chrominances are stored. This image format is referred to as YUV 4:4:4 format. The YUV 4:4:4 data 121 are further compressed by an encoder 130 and transmitted over a channel 140. The encoder 130 in this example is an H.264/AVC video encoder. The channel 140 here can be, for instance, any network, fixed or wireless, it may be a storage such as magnetic or optical disks, a flash memory, magnetic optical storage media, etc.

In order to render the image or video onto a display 170, the data is first retrieved/received from the channel 140 and decoded by a decoder 150. The decoder performs an inverse operation to the encoder 130. If a lossy compression has been applied by the encoder 130, the reconstructed YUV 4:4:4 data 151 will possibly differ from original YUV 4:4:4 data 121. After decoding, the inverse color space transformation 160 is applied to obtain the decoded RGB 4:4:4 image data 161, which can be displayed on a display 170 or further stored or printed.

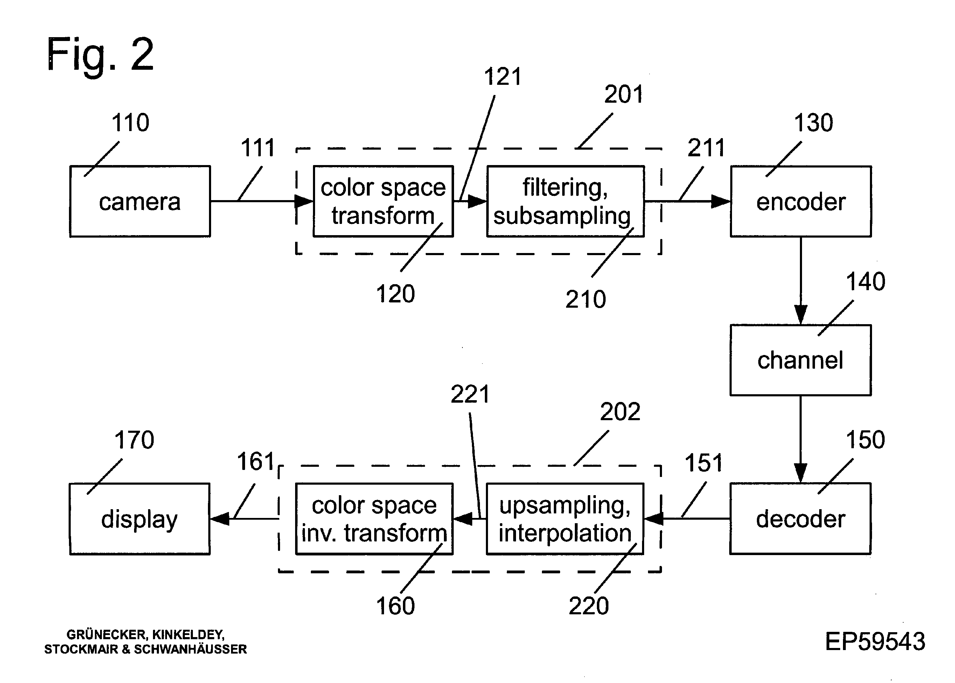

Figure 2 illustrates another example of the transmission chain according to state of the art. A real scene is captured by a camera 110. The output of the camera is video data 111 in the RGB 4:4:4 color format. A color transform 120 is then applied to the RGB 4:4:4 data 111 in order to obtain the 4:4:4 YUV data 121. As a consequence of color space transformation, the two chrominance components U and V of the image in YUV 4:4:4 format are typically smooth in comparison with the luminance component Y. This smoothness can already be used at this stage to reduce the amount of data necessary to transmit/store the image. This is performed by subsampling 210 the chrominance components in horizontal and/or vertical direction. Subsampling 210 reduces the number of samples per image, for instance, by omitting certain samples. A subsampling grid containing the samples that has not been omitted is a subset of the original or filtered image values and typically has a regular form. Before subsampling, a filter may be applied which is usually a low-pass filter. Several low-pass filters have been suggested by the ISO (International Organization for Standardization) and accepted in the MPEG (Moving Picture Experts Group) and VCEG (Video Coding Experts Group) community for this purpose. The filtered image is subsampled, for example, by leaving out every second line and every second column, which leads to a number of chrominance component values being four times smaller than the number of luminance component values. Such a format is called YUV 4:2:0 format. Thus, the color format conversion 201 in this case includes a color space transformation 120, as well as filtering and subsampling 210. If the original color image 111 is already in a desired color space, the color format transformation 201 may also only include the subsampling (and possibly filtering). The data 211 in the second color format YUV 4:2:0 are then passed to the encoder 130, stored or transmitted to/via a channel 140, and decoded by the decoder 150. Another subsampling grids can be used such as, for instance, 4:2:2 grid which leaves out every second column of the (filtered) chrominance components, or any other sampling grid.

The encoder 130 is an image or video encoder such as, for instance, image compression standard JPEG or JPEG 2000, or video coding standard H.261, H.263, H.264/AVC, MPEG-1, MPEG-2, MPEG-4, any other standardized or proprietary image or video standard. The operations of such encoders include typically subdividing the image data into smaller blocks, transforming the data in blocks by a linear transformation (e.g. discrete cosine transformation) and efficiently encoding the transformed data by means of an entropy encoder. Other techniques such as, for example, motion compensation or spatial prediction may be employed as well. During all these operations, the luminance and chrominance components of the image are typically treated separately.

The data received/retrieved from the channel 140 are decoded by the decoder 150 corresponding to the employed encoder 130. The decoded data 151 in YUV 4:2:0 format are then input to the color format deconversion 202 comprising upsampling and interpolation unit 220, which upsamples the subsampled chrominance components to the original size by interpolating the missing pixels. The interpolated data 221 in YUV 4:4:4 color format are then deconverted to the RGB color space by inverse color space transformation 160, and the resulting image data 161 in RGB 4:4:4 color format are then displayed on the display 170 or printed or stored.

The color format conversion 201 comprising color space transformation 120 and filtering and subsampling 210 preprocesses the image data in such a manner that they can be more efficiently stored or further encoded by the encoder 130. While color space transformation alone does not reduce the amount of color components per pixel, the subsampling process as described above (from YUV 4:4:4 to YUV 4:2:0) already reduces the amount of color components per pixel to one half of its original amount. For some image contents, this reduction followed by an interpolation is almost unperceivable by a human. Especially the natural images can be reconstructed by interpolation 220 without noticeable loss. In general, the color space transformation 120 into the YUV color space already reduces the correlation between the color components by subtracting the luminance from the remaining color components. However, there are images for which other types of color space transformations might lead to better results. Also a fixed interpolation filter 220 may be sufficient in most cases. However, there will always be images with content, where the filtering using another type of filter would be advantageous. For some image contents, the subsampling 210 and then upsampling 220 may lead to noticeable artifacts. The quality of image reconstruction as well as compression gain varies considerably with the color format (color space, subsampling) and with the properties of the image or video to be encoded. Furthermore, since the YUV color space, used in most of the video coding standards today, is not always efficient for the coding purposes, the coding (compression) gain is limited. Moreover, the upsampling is typically performed using a fixed interpolation filter, which may cause annoying disparities of the so upsampled image.

SUMMARY OF THE INVENTION

The aim of the present invention is to overcome the above-mentioned problems and to provide a method and an apparatus for color format conversion and deconversion that is efficient for various image contents.

This is achieved by the features as set forth in the independent claims.

Preferred embodiments are the subject matter of the dependent claims.

It is the particular approach of the present invention to determine at the side of color format conversion the color format deconversion parameters and to provide them together with the converted image or video data. It is further the particular approach of the present invention to receive the color format deconversion parameters at the deconversion side and to use them in the color format deconversion operation.

Determining the color format deconversion parameters at the color format conversion side is advantageous since the original (non-converted) color image and the entire information about its original format are still available. Furthermore, determining the color format deconversion parameters at the conversion side helps keeping the decoder less complex and, at the same time, to achieve improved quality resulting from the possibility of choosing various color format deconversion coefficients that may take into account information available at the encoder.

According to a first aspect of the present invention, a method for color format conversion is provided for converting a color image from a first color format into a second color format. The method comprises a step of determining color format deconversion coefficients for use in the deconversion operation of the color image from the second color format into the first color format, and a step of providing the converted image data in the second color format together with the determined deconversion coefficients. The color format of a color image is a format in which the color components of the image are stored, the format including, for instance, a color space and/or the subsampling. Here, the color space is specified, for instance, by its name, if it is a standardized and/or well-known color space, or by means of a transformation coefficients from a known color space to the color space to be specified. The subsampling is specified by a subsampling grid and the number of bits per sample. Again, particular color grids have standardized names as, for instance, 4:4:4 (meaning no subsampling), 4:2:0 or 4:2:2, the latter two referring to a ratio between the number of samples per color component. The exact position of the samples for the 4:2:0 sampling may vary and the decoder/deconverter does not typically receive the information about the exact sampling grid from the encoder/converter.

According to a further aspect of the present invention, a color format converter is provided for converting a color image from a first color format into a second color format. The color format converter comprises a determining unit for determining color format deconversion coefficients for use in the deconversion operation of the color image from the second color format into the first color format. The color format converter is capable of providing the converted image data in the second color format together with the determined color format deconversion coefficients. The converted image together with the determined color format deconversion coefficients is provided, for instance, for a transmission over a channel, which may be any wired or wireless channel. Alternatively, the converted image together with the determined color format deconversion coefficients may be provided for storing in various kinds of storages or media, such as USB sticks, optical or magnetic hard discs or media like DVD, CD, BD, etc. Both the converted image and the determined color format deconversion coefficients may be encoded.

Preferably, the determining of the color format deconversion coefficients is based on the properties of the color image to be converted. This allows adaptive choice of the deconversion coefficients according to the properties of the color image. Since the possible quality loss of the color image after being deconverted depends on its properties, the adaptive choice of the color format deconversion parameters results in improvement of the deconverted image quality.

Preferably, for the determination, the converted color image is further deconverted and the color format deconversion coefficients are estimated based on the properties of a deconverted image and on the applied conversion operation. It is of advantage, to have additionally the original non converted image available. Availability of the deconverted image and possibly the original non converted image enables adaptive choice of the deconversion parameters according to the properties of the deconverted image and according to the applied color format conversion. The color format deconversion parameters are estimated, for instance, using a linear or a non-linear optimization method with a predefined cost function. In particular, if both the color image in the first color format and the deconverted image are available, estimation based on minimizing the mean square error between the color image in the first color format and the deconverted image is preferably applied.

Preferably, the color format conversion transforms the color space of the color image from a first color space into a second color space. The color format deconversion coefficients include inverse color space transformation coefficients, the inverse color space transformation transforming the color image from the second color space to the first color space. The first and the second color space may be one of the well-known color spaces. These may be, for instance, color spaces based on red, green and blue components (e.g. RGB, sRGB), or color spaces based on luminance and chrominance components (e.g. YIQ, YUV, YCbCr), or color spaces based on hue and saturation (e.g. HSV, HSI), or CMYK, or any other color spaces.

However, the second color space is preferably an adaptive color space determined adaptively by estimating color space transformation coefficients based on the color image to be converted, wherein the color format conversion transforms the color space of the color image from the first color space to the second color space using the estimated color space transformation coefficients. In particular, the color space transformation coefficients are estimated based on a decorrelation transformation, especially Karhunen-Loève transformation. Decorrelation transformation decorrelates the color space components. The resulting adaptive color space enables thus an efficient representation of the image. For the same quality of image, lower rate may be achieved in comparison to a fixed color space transformation. The inverse color space transformation coefficients can then be estimated as described above.

Preferably, the color format conversion subsamples the color image in the first color format or in the second color space format, the subsampled color image having less samples than the input color image. In particular, the color format conversion filters the color image in the first color format or in the second color space format before subsampling. In particular, the filtering is performed by a low-pass filter. However, other filters can also be used. The filters other than low-pass filters may be advantageous for images with certain properties, for instance, containing a lot of edges.

Preferably, the color format deconversion coefficients include interpolation filter coefficients, interpolation filter being used for upsampling of the downsampled color image. In particular, the interpolation filter coefficients are estimated as Wiener filter coefficients. However, the interpolation filter coefficients can also be estimated based on optimizing another measure than mean square error, non-linear filters may be deployed, the upsampled (deconverted) image need not be necessarily used for the estimation.

Preferably, the color format deconversion coefficients are encoded using an entropy encoder. The entropy encoder may be based on known entropy codes such as Huffman codes, Golomb codes, exponential Golomb codes, arithmetic codes, or any other entropy codes. Entropy encoding the coefficients enables reduction of the rate necessary for transmitting them or storing them in a medium.

In a preferred configuration, the color format deconversion coefficients are determined individually for each slice of the color image or color image video sequence. This enables adapting the color format conversion and/or deconversion on the properties of the image to be converted and even on its parts. Units other than slice may be used as well, such as macroblocks, groups of macroblocks other than slices, fields (if interlacing is applied), frames, etc.

Alternatively, the color format deconversion coefficients are determined once per a plurality of color images. The plurality of color images may be a predefined fixed number, for instance, the color format deconversion coefficients can be determined each second, third, fourth, etc. image in order to reduce the amount of data necessary for their transmission or storage. If the video sequence is smooth in time, the adapting the conversion and/or deconversion parameters for plurality of images shall provide sufficient quality gain/encoding gain. However, in some cases it may be advantageous to provide the color format deconversion coefficients for a varying number of color images (i.e. video frames), for instance, per group of pictures if temporally predictive encoding mechanism is applied and if the size of a group of pictures is variable. The number of images can also be chosen in accordance with the video sequence properties, such as temporal smoothness, occurrence of scene changes, etc.

Preferably, the color format deconversion coefficients relate to inverse color space transformation and coefficients related to interpolation filter, the coefficients related to inverse color space transformation being determined less frequent than the coefficients related to interpolation filter. This allows to scale the adaptivity: in some cases it may be beneficial to keep the color space transformation unchanged, for instance, during a group of pictures. The color format deconversion coefficients comprising interpolation filter coefficients may vary faster. Other configurations are possible where a predefined number of images, for which the coefficients related to inverse color space transformation have to be determined, can be smaller than a predefined number of images, for which the coefficients related to interpolation filtering are determined. However, the determining of the color format deconversion coefficients related to the interpolation filtering may also be performed less frequent than the determination of the color format deconversion coefficients related to the inverse color space transformation.

Preferably, after the color format conversion, the color image of a video sequence of color images is encoded according to an image or video coding standard, like JPEG, JPEG2000, MPEG-2, MPEG-4, H.263, H.264/AVC. Another video coding standards or proprietary video coding methods may equally be used. Encoding of the color image or video sequence reduces the amount of data needed for storing or transmission thereof. However, the converted image or video data in the second color format can also be directly stored or transmitted.

In particular, video coding standard H.264/AVC is applied and the color format deconversion coefficients are provided within the H.264/AVC Supplemental Enhancement Information message. This allows an H.264/AVC standard compliant deployment of the present invention.

In accordance with another aspects of the present invention, a method for image encoding and an image encoder is provided that comprises color format conversion as described above and compression of the image after the color format conversion. Such image or video encoder may be a standardized or a proprietary image or video encoder that implements the color format conversion in accordance with the present invention as a mandatory or optional feature.

According to a further aspect of the present invention, a method for color format deconversion is provided, which deconverts a converted color image from a second color space into a first color space. First, color format deconversion coefficients are obtained together with the converted image in the second color format. Then, the converted color image in the second color format is deconverted into the first color format employing the obtained color format deconversion coefficients.

According to a yet further aspect of the present invention, a color format deconverter is provided for deconverting a converted color image from a second color space into a first color space. The deconverter is capable of obtaining color format deconversion coefficients together with the converted image in the second color format. The deconverter is further capable to deconvert the converted color image from the second color format into the first color format employing the color format deconversion coefficients obtained. The converted image together with color format deconversion coefficients are obtained, for instance, by receiving from a channel, which may be any wired or wireless channel. Alternatively, the converted image together with the color format deconversion coefficients may be provided by retrieving from a storage of various kinds such as USB sticks, optical or magnetic hard discs or media like DVD, CD, BD, etc. Both the converted image and the determined color format deconversion coefficients may be encoded.

Preferably, the color format deconverting includes transforming the color space of the color image from a second color space to a first color space. Here, the first and the second color space may be one of the known color spaces like RGB, YUV, HIS, etc. The color format deconversion coefficients include preferably inverse color space transformation coefficients. In particular, the second color space is an adaptive color space determined adaptively by estimating color space transformation coefficients based on the color image to be converted. In particular, the color space transformation coefficients are estimated based on a decorrelation transformation, especially Karhunen-Loève transformation.

Preferably, the color format deconversion upsamples the converted color image, the upsampled image having more samples than the input converted color image.

In particular, the upsampling is performed by using interpolation filtering, the interpolation filter coefficients being obtained within the color format deconversion coefficients. Obtaining the interpolation filter coefficients enables adaptive interpolation filtering in dependence on the received coefficients and provides a quality gain without increasing the complexity of the decoder by, for instance, postprocessing methods. In particular, the interpolation filter coefficients are Wiener filter coefficients. However, any other filtering and determining of the filter coefficients is also applicable.

Preferably, obtaining the color format deconversion coefficients includes entropy decoding thereof.

In accordance with a preferred configuration of the present invention, the color format deconversion coefficients are obtained individually for each slice of the color image or the color image video sequence.

Alternatively, the color format deconversion coefficients are obtained once per a plurality of color images.

Preferably, the color format deconversion coefficients include coefficients related to inverse color space transformation and coefficients related to interpolation filter, the coefficients related to inverse color space transformation being obtained less frequent than the coefficients related to interpolation filter.

Preferably, obtaining the converted image in the second color format includes decoding thereof in accordance with an image or video coding standard, like JPEG, JPEG2000, MPEG-2, MPEG-4, H.263, H.264/AVC.

In particular, the video coding standard H.264/AVC is applied and the color format deconversion coefficients (the filter coefficients and/or the inverse color space transformation coefficients) are obtained within the H.264/AVC Supplemental Enhancement Information message.

In accordance with yet another aspect of the present invention, a method for image decoding and an image decoder are provided comprising decompression of the obtained image and color format deconversion of the decompressed image as described above.

The above and other objects and features of the present invention will become more apparent from the following description and preferred embodiments given in conjunction with the accompanying drawings, in which:

Figure 1    is a block diagram illustrating a state of the art image or video color format conversion and deconversion, comprising color space transformation;

Figure 2    is a block diagram showing another state of the art video or image format conversion and deconversion, comprising color space transformation and sub-/up-sampling with filtering;

Figure 3    is a block diagram illustrating the color format conversion and deconversion in accordance with an embodiment of the present invention, as a part of an image transmission system;

Figure 4A   is a block diagram illustrating the color format conversion according to an embodiment of the present invention;

Figure 4B   is a block diagram illustrating the color format deconversion according to an embodiment of the present invention;

Figure 5       is a schematic drawing of sampling adaptive color space in accordance with the present invention;

Figure 6A       is a block diagram illustrating the color format conversion according to another embodiment of the present invention;

Figure 6B       is a block diagram illustrating the color format deconversion according to another embodiment of the present invention;

Figure 7A       is a block diagram showing the color format conversion according to yet another embodiment of the present invention; and

Figure 7B       is a block diagram showing the color format deconversion according to yet another embodiment of the present invention.

Figure 8       is a block diagram illustrating the color format conversion and deconversion in accordance with yet another embodiment of the present invention.

DETAILED DESCRIPTION

The present invention relates to a color format conversion of a color image consisting of a plurality of color components. These components may belong to an arbitrary color space. The number of samples per component is not necessarily the same. In general, the format of the image, i.e. the particular color space and sampling, depends on the source. Typically, the images taken by a camera are output therefrom in the RGB format having three components red, green and blue, and usually having the same number of samples per component, resulting in RBG 4:4:4 color format, and having the same number of bits per sample, typically 8 or 16.

The purpose of the color format conversion is to convert the color image from its original first color format (i.e. format in which the color components are input to the color format conversion) to another format. The format here refers to a color space and/or to the way of sampling.

In the state of the art as described above, the color format conversion is fixed. This means that regardless of the image content of the image to be converted, the color transformation and/or possibly filtering and subsampling is performed in the same way. Both color transform as well as filtering and sampling are designed so as to work efficiently for the majority of typical images. The efficiency here has two meanings. Firstly, the color transform aims at reducing the correlation between the particular color components. This is achieved in YUV color space having one luminance component and two differential chrominance components. The chrominance components of such color space, being smoother than the luminance component, enable later subsampling so that the distortion of the image resulting from such rate reduction is reduced. Secondly, if another step of encoding including, for instance, a compression is applied, the compression gain with respect to the resulting distortion will depend on the input image format. The image after a suitable color format conversion can be compressed more efficiently, i.e., with higher compression gain. Thus, using a fixed and independent color format conversion and deconversion, typical in the today's applications, limits the coding efficiency.

The present invention enables a color format conversion and deconversion with increased efficiency by determining the color format deconversion coefficients by the color format converter and by providing the color format deconversion coefficients together with the converted image data.

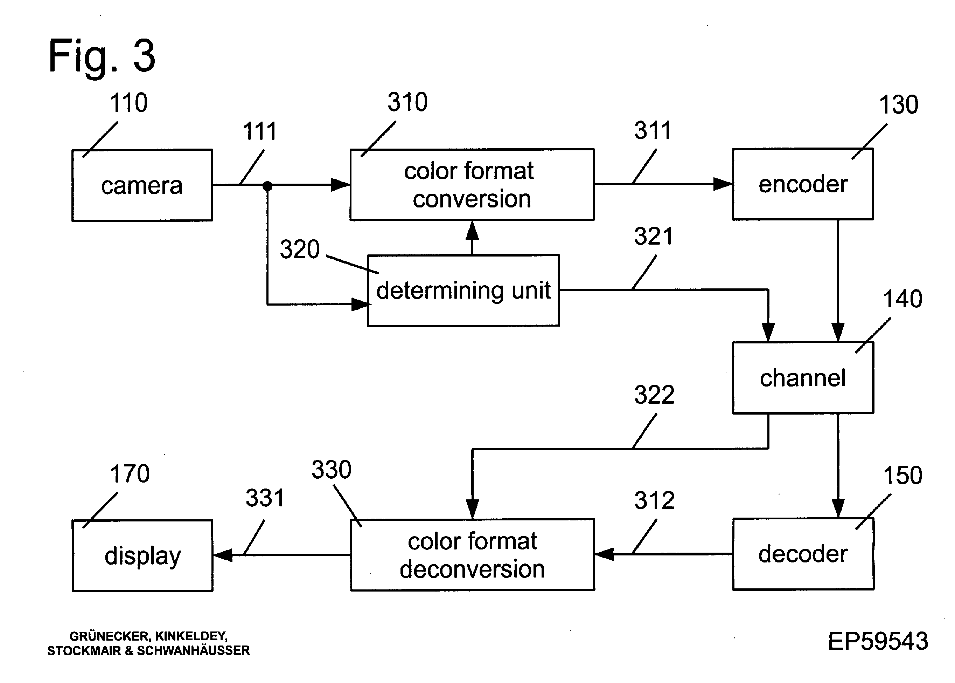

Figure 3 illustrates color format conversion and deconversion in accordance with an embodiment of the present invention as a part of a video transmission system. Video camera 110 provides a sequence of color images (video frames) which are composed of three equally sampled color components of the RGB color space (RGB 4:4:4 color format) 111. A different sampling grid is also possible, e.g. Bayer Pattern grid. The image data 111 are input to a color format conversion 310 which converts the image data 111 from a first color format into a second color format 311. The image data 111 may also be input to a determining unit 320, which is capable of determining color format deconversion coefficients 321 to be used in the color format deconversion 330. The determined color format deconversion coefficients 321 are then provided together with the converted image data 311 in the second image format. The image data 311 after color format conversion can be further encoded by the encoder 130 which, in this example, is an H.264/AVC video encoder. The encoded data together with the encoded side information comprising the color format deconversion coefficients 321 are then transmitted over a channel 140. The channel 140 can be any wireless or wired channel, the transmission can be unicast, multicast or broadcast, according to the requirements of the target application.

After having been received, the converted image data are decoded by a decoder 150 and provided to the color format deconversion 330. The decoder 150 performs inverse operations to that of the encoder 130. In this example, the decoder 150 is an H.264/AVC decoder. The color format deconversion coefficients 322 are also provided to the color format deconversion 330. The color format deconversion 330 of the image data 312 then uses the received color format conversion coefficients. The resulting image 331 may then be displayed by display 170.

In this example, the camera 110 is a video camera. However, it may be a camera providing only still images. The camera 110 may also output the image in a format other than RGB 4:4:4 format, for instance, a mosaic raw data format, a YUV format, or any other color format wherein the outputted color components do not necessarily have the same sampling and depth. The determination of color format deconversion coefficients may be performed for color space transformation and/or the filtering and/or the subsampling. Transmitting the data over a channel 140 or storing in a storage medium may be performed separately for the image data and for the side information comprising the color format deconversion coefficients. The color format deconversion coefficients are stored or transmitted together and/or multiplexed with the corresponding image data. If encoding 130 and decoding 150 is employed, it is not limited to the H.264/AVC standard, it can be any of image or video data compression standards such as, for instance, JPEG, JPEG 2000, MPEG-1, MPEG-2, MPEG-4, H.261, H.263, DIRAC or any other standardized or proprietary encoding and decoding mechanism. After performing the color format deconversion, the image data may be displayed on various types of a display including CRT, OLED, LCD, at various types of terminals, and it can be printed out or stored.

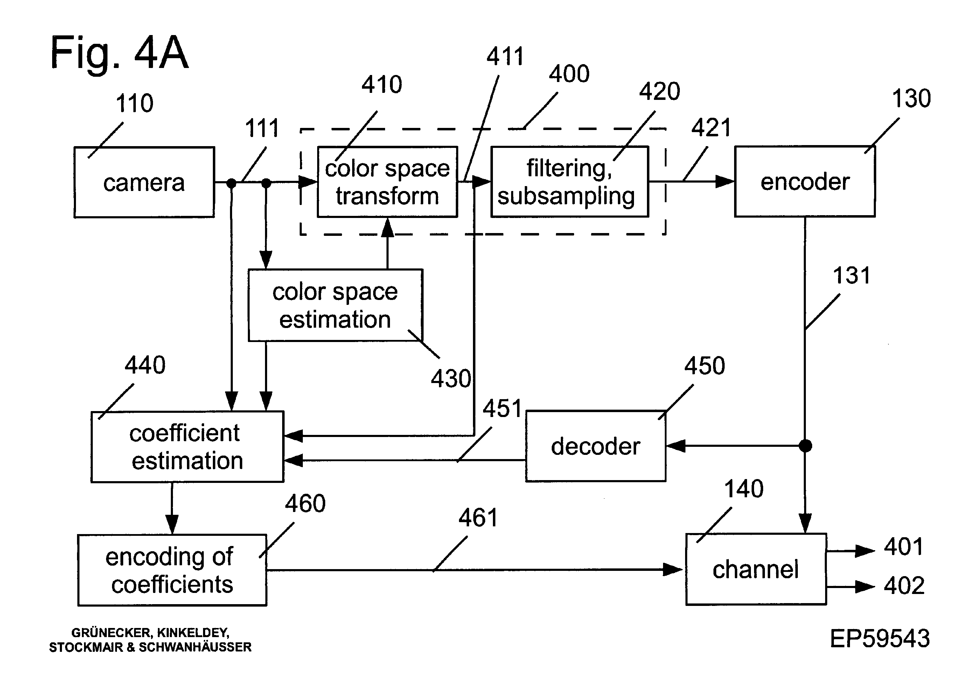

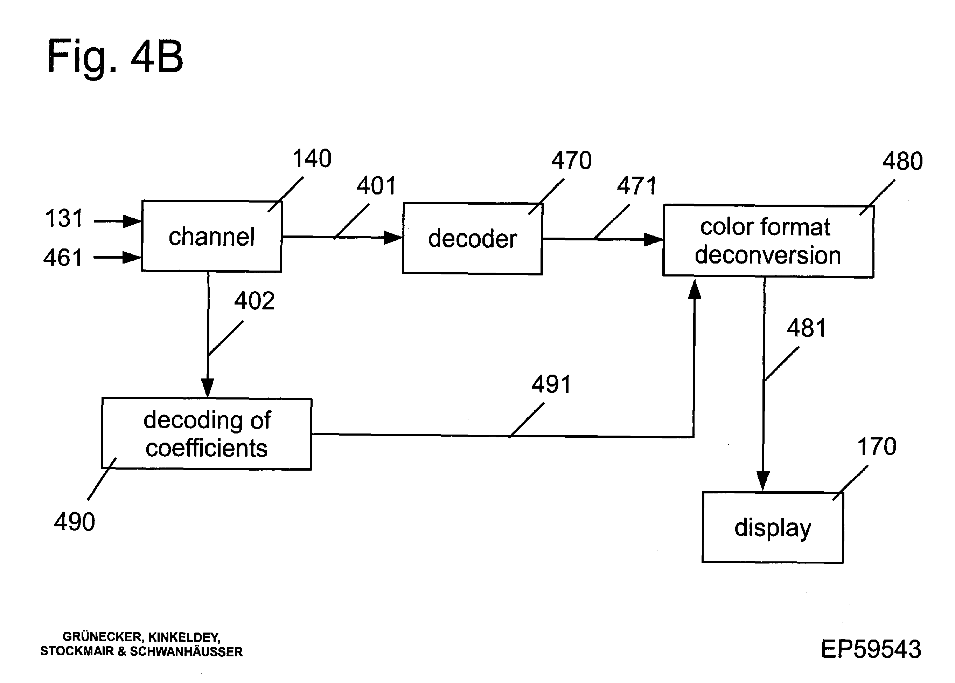

Figure 4 shows a block diagram of a transmission chain comprising color format conversion and deconversion in accordance with another embodiment of the present invention. Here, Figure 4A illustrates a transmitter side and Figure 4B illustrates the receiver side.

A video camera 110 provides color images 111 in the RGB 4:4:4 color format. The color components of the original image 111 in the RGB 4:4:4 color format are called $R$, $G$, and $B$. The color format converter comprises a color space estimator 430 for estimating the color space transformation matrix. This is performed based on the properties of the original video data in the RGB 4:4:4 color format, such as the statistics (e.g. the first and second moments). The estimated color space color transformation matrix is then employed to transform video data 111 from the RGB 4:4:4 color format into a new color space, an adaptive color space (ACS). The resulting ACS video data 411 has still the 4:4:4 sampling format. The color space estimation 430 may use various criterions for the estimation purpose. One criterion may be the decorrelation of the three color components $A$, $C$ and $S$ of the ACS color space. A Kahunen-Loève transformation allows generating three ACS color components out of the three RGB color components that are uncorrelated among each other. This is beneficial, for instance, for encoders that code the three color components independently. The resulting video data in the ACS color space can further be low-pass filtered and downsampled using low pass filters, for instance, as defined by ISO, but all other filters are also possible.

First, the color space estimator 430 determines the transformation matrix $T_{KLT}$ of the Karhunen-Loève transformation that produces uncorrelated color components $A$, $C$, and $S$ as follows:

$$\begin{pmatrix} A(x,y) \\ C(x,y) \\ S(x,y) \end{pmatrix} = T_{KLT} \cdot \begin{pmatrix} R(x,y) \\ G(x,y) \\ B(x,y) \end{pmatrix}.$$

Here, $x$ and $y$ are indexes within each color component specifying particular spatial samples. The color space spanned by the color components $A$, $C$, and $S$ is the adaptive color space. It is called adaptive, since it adapts to the properties of the color image or video data. For instance, for determining the transformation matrix $T_{KLT}$, statistical properties of the color image are used.

The transformation matrix $T_{KLT}$ is then employed in color space transformation 410. In addition, the color space transformation 410 includes the following scaling and mean adjustment:

$$\begin{pmatrix} A'(x,y) \\ C'(x,y) \\ S'(x,y) \end{pmatrix} = \begin{pmatrix} (A(x,y) - m_A) \cdot s_A + 2^{(b_A - 1)} \\ (C(x,y) - m_C) \cdot s_C + 2^{(b_C - 1)} \\ (S(x,y) - m_S) \cdot s_S + 2^{(b_S - 1)} \end{pmatrix}.$$

Here, coefficient $m_A$ is the mean value of $A$, coefficient $m_C$ is the mean value of $C$, and coefficient $m_S$ is the mean value of $S$. All means are determined by the color space estimation. The scaling coefficient $s_A$ adjusts the dynamic range of $A'$ according to

$$s_A = \min\left(1, \frac{2^{(b_A-1)}}{\max(|A(x,y)-m_A|)}\right).$$

The scaling coeffcient $s_C$ adjusts the dynamic range of $C'$ according to

$$s_C = \min\left(1, \frac{2^{(b_C-1)}}{\max(|C(x,y)-m_C|)}\right).$$

The scaling coefficient $s_S$ adjusts the dynamic range of $S'$ according to

$$s_S = \min\left(1, \frac{2^{(b_S-1)}}{\max(|S(x,y)-m_S|)}\right).$$

Parameter $b_A$ is the number of bits used to represent the samples of the color component $A'$, parameter $b_C$ is the number of bits used to represent the samples of the color component $C'$, and parameter $b_S$ is the number of bits used to represent the samples of the color component $S'$. All scaling coefficients are determined by the color space estimation 430.

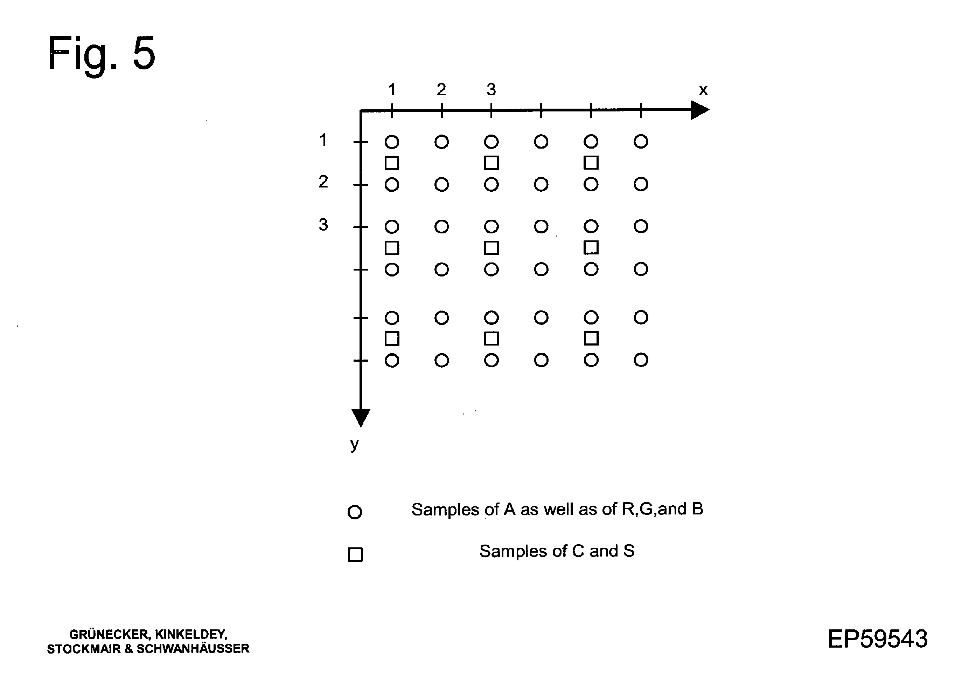

After the color space transformation 410, the color components $C'$, and $S'$ are filtered and subsampled 420, for instance, according to ISO/IEC JTC1/SC29/WG11 N6295 ("Color format down-conversion for test sequence generation"), resulting in the color components $C''$, and $S''$, and in the color format ACS 4:2:0. The sampling grid of the color components in the RGB color space and the ACS color space are shown in Figure 5. The position of the samples in the ACS color space is chosen according to those defined in H.264/AVC standard.

The color components $A'$, $C''$, and $S''$ are then rounded to the next integer and clipped to the ranges $[0;2^{b_a}-1]$, $[0;2^{b_c}-1]$, and $[0;2^{b_s}-1]$ respectively.

The rounded and clipped color components $A'$, $C''$, and $S''$ 421 of the adaptive color space are further encoded by the image encoder 130, in this example the encoder 130 is an H.264/AVC standard compliant encoder.

Still at the side of the color format conversion, an H.264/AVC decoder 450 is used to decode the encoded data 131. The data after image decoding 451 may differ from the data before image encoding 421 if the encoder applies a lossy compression.

After decoding, color components $A''$, $C''$, and $S'''$ 451 are obtained. The color transform coefficients $s_A$) $s_C$, $s_S$, $m_A$, $m_C$, and $m_S$ are further used for the estimation 440 of the other color format deconversion coefficients.

The conversion of the decoded video data in the ACS 4:2:0 color format to the decoded video data in the RGB 4:4:4 color format is performed as follows.

In a first step, a scaling and mean adjustment is performed according to

$$\begin{pmatrix} \tilde{A}(x,y) \\ \tilde{C}(x,y) \\ \tilde{S}(x,y) \end{pmatrix} = \begin{pmatrix} (A''(x,y)-2^{(b_A-1)}) \div s_A + m_A \\ (C'''(x,y)-2^{(b_C-1)}) \div s_C + m_C \\ (S'''(x,y)-2^{(b_S-1)}) \div s_S + m_S \end{pmatrix}.$$

In a second step, the decoded video data in the RGB 4:4:4 color format is calculated.

The three color components of this video data are called $\tilde{R}$, $\tilde{G}$, and $\tilde{B}$.

For the calculation of $\tilde{R}$, $\tilde{G}$, and $\tilde{B}$ at the positions $x = 0,2,4,...$ and $y = 0,2,4,...$ the formula

$$\begin{pmatrix} \tilde{R}(x,y) \\ \tilde{G}(x,y) \\ \tilde{B}(x,y) \end{pmatrix} = \tilde{A}(x,y) \cdot \begin{pmatrix} w_{1,A,R} \\ w_{1,A,G} \\ w_{1,A,B} \end{pmatrix} + \sum_{i=-\frac{n}{2}}^{\frac{n}{2}-1} \tilde{C}(x,y+0.5+2i) \cdot \begin{pmatrix} w_{1,C,R}(i) \\ w_{1,C,G}(i) \\ w_{1,C,B}(i) \end{pmatrix} + \sum_{i=-\frac{n}{2}}^{\frac{n}{2}-1} \tilde{S}(x,y+0.5+2i) \cdot \begin{pmatrix} w_{1,S,R}(i) \\ w_{1,S,G}(i) \\ w_{1,S,B}(i) \end{pmatrix}$$

is used. The filter length $n$ as well as the filter coefficients $w_{1,A,R}$, $w_{1,A,G}$, $w_{1,A,B}$, $w_{1,C,R}(i)$, $w_{1,C,G}(i)$, $w_{1,C,B}(i)$, $w_{1,S,R}(i)$, $w_{1,S,G}(i)$, and $w_{1,S,B}(i)$ are deconversion coefficients which are estimated in by the estimator 440.

For the calculation of $\tilde{R}$, $\tilde{G}$, and $\tilde{B}$ at the positions $x = 0,2,4,...$ and $y = 1,3,5,...$ the formula

$$\begin{pmatrix} \tilde{R}(x,y) \\ \tilde{G}(x,y) \\ \tilde{B}(x,y) \end{pmatrix} = \tilde{A}(x,y) \cdot \begin{pmatrix} w_{1,A,R} \\ w_{1,A,G} \\ w_{1,A,B} \end{pmatrix} + \sum_{i=-\frac{n}{2}}^{\frac{n}{2}-1} \tilde{C}(x,y-0.5-2i) \cdot \begin{pmatrix} w_{1,C,R}(i) \\ w_{1,C,G}(i) \\ w_{1,C,B}(i) \end{pmatrix} + \sum_{i=-\frac{n}{2}}^{\frac{n}{2}-1} \tilde{S}(x,y-0.5-2i) \cdot \begin{pmatrix} w_{1,S,R}(i) \\ w_{1,S,G}(i) \\ w_{1,S,B}(i) \end{pmatrix}$$

is used.

For the calculation of $\tilde{R}$, $\tilde{G}$, and $\tilde{B}$ at the positions $x = 1,3,5,...$ and $y = 0,2,4,...$ the formula

$$\begin{pmatrix} \tilde{R}(x,y) \\ \tilde{G}(x,y) \\ \tilde{B}(x,y) \end{pmatrix} = \tilde{A}(x,y) \cdot \begin{pmatrix} w_{2,A,R} \\ w_{2,A,G} \\ w_{2,A,B} \end{pmatrix} + \sum_{i=-\frac{n}{2}}^{\frac{n}{2}-1}\sum_{j=-\frac{n}{2}}^{\frac{n}{2}-1} \tilde{C}(x+1+2i,y+0.5+2j) \cdot \begin{pmatrix} w_{2,C,R}(i,j) \\ w_{2,C,G}(i,j) \\ w_{2,C,B}(i,j) \end{pmatrix} + \sum_{i=-\frac{n}{2}}^{\frac{n}{2}-1}\sum_{j=-\frac{n}{2}}^{\frac{n}{2}-1} \tilde{S}(x+1+2i,y+0.5+2j) \cdot \begin{pmatrix} w_{2,S,R}(i,j) \\ w_{2,S,G}(i,j) \\ w_{2,S,B}(i,j) \end{pmatrix}$$

is used. The filter coefficients $w_{2,A,R}$, $w_{2,A,G}$, $w_{2,A,B}$, $w_{2,C,R}(i,j)$, $w_{2,C,G}(i,j)$, $w_{2,C,B}(i,j)$ $w_{2,S,R}(i,j)$ $w_{2,S,G}(i,j)$, and $w_{2,S,B}(i,j)$ are deconversion coefficients which are estimated by the estimator 440.

For the calculation of $\tilde{R}$, $\tilde{G}$, and $\tilde{B}$ at the positions $x = 1,3,5,...$ and $y = 1,3,5,...$ the formula

$$\begin{pmatrix} \tilde{R}(x,y) \\ \tilde{G}(x,y) \\ \tilde{B}(x,y) \end{pmatrix} = \tilde{A}(x,y) \cdot \begin{pmatrix} w_{2,A,R} \\ w_{2,A,G} \\ w_{2,A,B} \end{pmatrix} + \sum_{i=-\frac{n}{2}}^{\frac{n}{2}-1}\sum_{j=-\frac{n}{2}}^{\frac{n}{2}-1} \tilde{C}(x+1+2i,y-0.5-2j) \cdot \begin{pmatrix} w_{2,C,R}(i,j) \\ w_{2,C,G}(i,j) \\ w_{2,C,B}(i,j) \end{pmatrix} + \sum_{i=-\frac{n}{2}}^{\frac{n}{2}-1}\sum_{j=-\frac{n}{2}}^{\frac{n}{2}-1} \tilde{S}(x+1+2i,y-0.5-2j) \cdot \begin{pmatrix} w_{2,S,R}(i,j) \\ w_{2,S,G}(i,j) \\ w_{2,S,B}(i,j) \end{pmatrix}$$

is used.

The color components $\tilde{R}$, $\tilde{G}$, and $\tilde{B}$ are rounded to the next integer and clipped to the ranges of the original $R$, $G$, and $B$ color components respectively.

In this example, the deconversion coefficients are the space color transform coefficients $s_A$, $s_C$, $s_S$, $m_A$, $m_C$, and $m_S$ as well as the filter coefficients $w_{1,A,R}$, $w_{1,A,G}$, $w_{1,A,B}$, $w_{1,C,R}(i)$, $w_{1,C,G}(i)$, $w_{1,C,B}(i)$, $w_{1,S,R}(i)$, $w_{1,S,G}(i)$, and $w_{1,S,B}(i)$, $w_{2,A,R}$, $w_{2,A,G}$, $w_{2,A,B}$, $w_{2,C,R}(i,j)$, $w_{2,C,G}(i,j)$, $w_{2,C,B}(i,j)$, $w_{2,S,R}(i,j)$ $w_{2,S,G}(i,j)$, and $w_{2,S,B}(i,j)$.

The filter coefficients are estimated by minimizing the mean squared error between the original color components $R$, $G$, and $B$ and the decoded color components $\tilde{R}$, $\tilde{G}$, and $\tilde{B}$. With this criterion, all filter coefficients can be explicitly calculated.

In order to reduce the data rate necessary to transmit the color format deconversion coefficients, the coefficients are encoded by an entropy encoder 460, for instance, by a Huffman coding, Golomb coding, exponential Golomb coding, arithmetic coding or any other variable length encoding approach. Moreover, the data can be protected by a checksum or by a forward error correction code, if necessary.

After having been sent over the channel 140, the encoded video data 401 and the encoded color format deconversion coefficients 402 are received. The color format deconversion coefficients 402 are entropy decoded 490 and their values 491 are provided to the color format deconversion 480. The received encoded video data 401 is decoded by an H.264/AVC decoder 470, and the decoded video data 471 is provided to the color format deconversion 480. The color format deconversion 480 is then performed using the receiver color format deconversion coefficients as described above. In this example, the upsampling and the inverse color space transformation are performed in one color format deconversion step. However, the upsampling and the inverse color space transformation may also be performed separately. Moreover, it is also possible to only perform one of the upsampling or the inverse color space transformation. In these cases separate coefficients for the inverse color space transformation and for the upsampling may be necessary.

The rounded and clipped color components $\tilde{R}$, $\tilde{G}$, and $\tilde{B}$ 481 are then sent to the display 170.

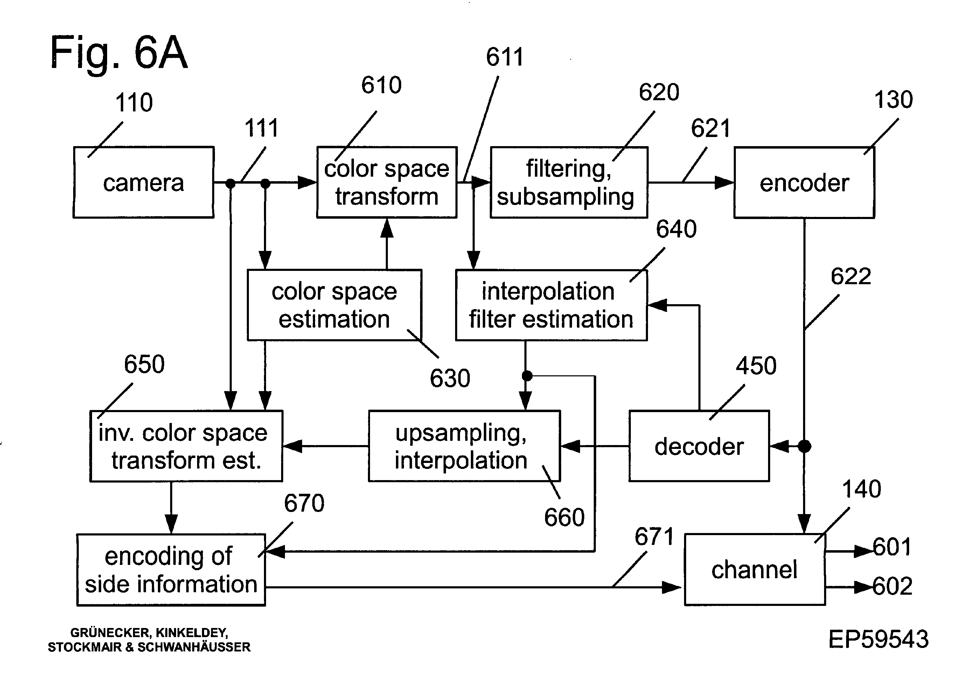

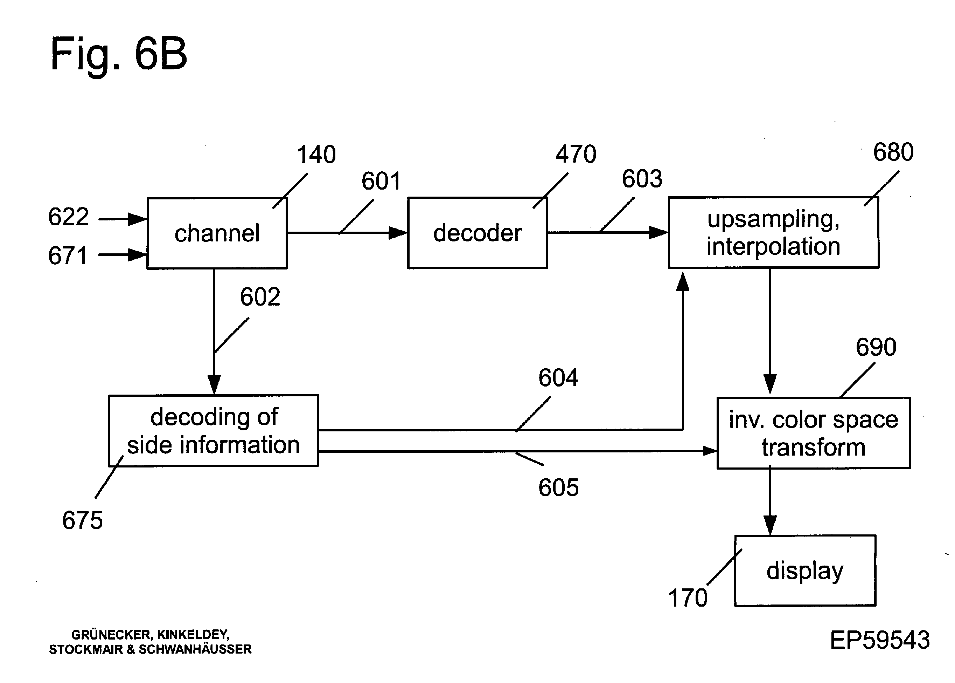

Figure 6 illustrates a block diagram of a transmission chain comprising color format conversion and deconversion in accordance with another embodiment of the present invention. Here, Figure 6A illustrates a transmitter side and Figure 6B illustrates the receiver side.

In this case, a separate estimation of deconversion coefficients is performed for the inverse color space transformation and for interpolation filtering. Correspondingly, at the side of deconversion, the upsampling and interpolation filtering is performed separately from the inverse color transformation.

Similarly to the processing illustrated in Figure 4, camera 110 provides RGB 4:4:4 video data 111. This data is used for the color space estimation 630, where the transformation matrix T is determined. The estimated transformation is then performed and color space of the input video data 111 is transformed 610 into data 611 in adaptive color space corresponding to the determined transformation. The color space transformed data in ACS 4:4:4 color format are further filtered and subsampled 620, resulting in video data 621 in ACS 4:2:0 color format. The data 621 in ACS 4:2:0 color format are encoded by the H.264/AVC encoder 130 and the encoded data 622 are provided to the decoder 450 still at the transmitter side.

After decoding, the obtained data are used for interpolation filter coefficient estimation 640. One possibility is to estimate the interpolation filter as a Wiener filter. Hereby, the filter coefficients are estimated by minimizing the mean squared error between the decoded video data in the ACS 4:2:0 color format after upsampling and interpolation and the original video data in the ACS 4:4:4 color space. Other estimation criteria are also possible. For example, the Lagragian costs of data rate and mean squared error can be minimized. The video data are upsampled and interpolated 660 using the estimated filter coefficients, which are further encoded using an entropy coder 670 and transmitted together with the encoded video data. Moreover, the upsampled video data are provided for the estimation of the inverse color space transformation. This estimator 650 uses the decoded video data in the ACS 4:4:4 color format and the original video data in the RGB 4:4:4 color format for the estimation as well as the color space transformation parameters previously determined by the color space estimator 630. Hereby, the inverse color transform parameters may be estimated by minimizing the mean squared error between the decoded video data in the RGB 4:4:4 color format and the original video data in the RGB 4:4:4 color format. The inverse color space transformation coefficients are then also encoded by the entropy encoder 670 and transmitted as side information with the interpolation filter coefficients 671 and the encoded data 622.

At the receiver side, the color format deconversion coefficients 602 are decoded, and the interpolation filter coefficients 604 are provided to the upsampling and interpolation 680, together with the video data 603 decoded from the received video data 601 by the decoder 470. Using the filter coefficients 604, the interpolation filtering of the decoded video data 603 is performed. The outcome is the video data in the ACS 4:4:4 color space, that are further inversely transformed 690 using the inverse color space transformation coefficients 605.

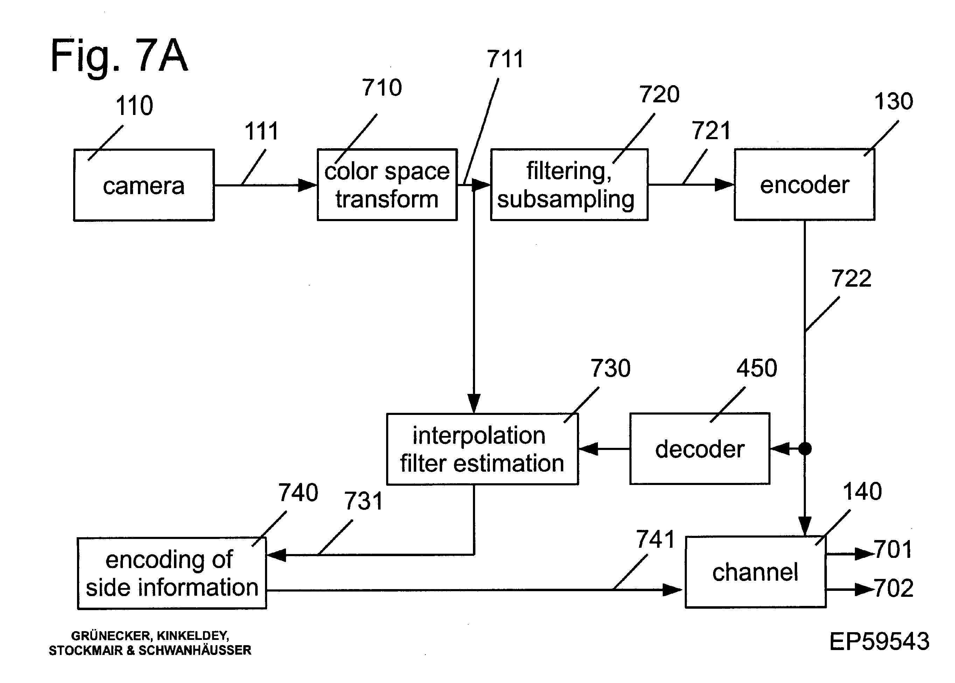

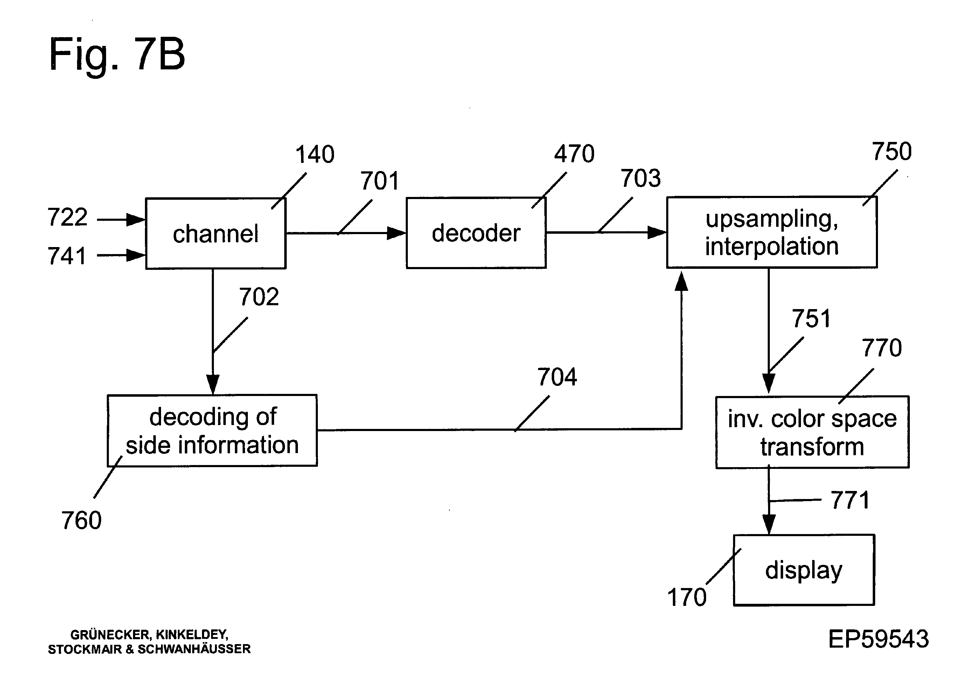

Another example illustrating deployment of the color format converter and deconverter in accordance with the present invention is shown in Figure 7. Here, Figure 7A illustrates a transmitter side and Figure 7B illustrates the receiver side.

In this example, a standard color space transformation 710 is performed instead of the adaptive color space transformation. The color space transformation 710 here is a transformation from the RGB 4:4:4 color format to the YUV 4:4:4 color format. However, any other color space may be used as well.

Video data 111, provided by the video camera 110, are transformed using a predefined color space transformation 710, in this case a transformation into the YUV 4:4:4 color format. Resulting data 711 are further filtered and subsampled 720, resulting in video dara 721 in YUV 4:2:0 format, which are then encoded by the H.264/AVC encoder 130. The encoded data 722 are further decoded by the decoder 450 and used for the estimation of interpolation filter coefficients, which may be performed similarly to the previous example, namely by Wiener filter estimation, estimating the coefficients by minimizing the mean square error between the original video data and the decoded video data. However, other linear and non-linear estimation methods can be used as well. It is also possible to optimize the interpolation filter coefficients and the inverse color transformation coefficients in other color spaces than RGB, for instance, YUV, if necessary.

The estimated interpolation filter coefficients 731 are further encoded by the entropy encoder 740 and transmitted together with the encoded video data 722.

At the receiver, the video data 701 are decoded by the H.264/AVC decoder 740 and the decoded video data 703 in YUV 4:2:0 color format are upsampled using interpolation filtering with the coefficients 704, received together with the video data and entropy decoded 760. After upsampling, the YUV 4:4:4 video data 751 are transformed to the RGB 4:4:4 color space using a standard inverse color space transformation 770. The RGB 4:4:4 data 771 is then displayed on the display 170.

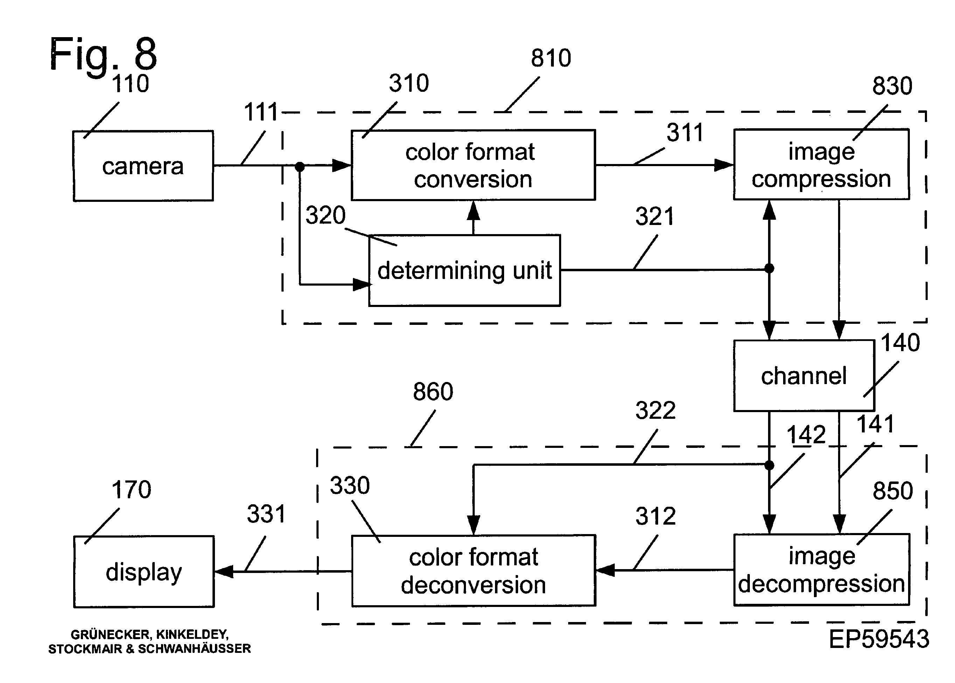

Figure 8 illustrates another example in accordance with the present invention. Accordingly, the color format conversion 310 with the determining unit 320 are parts of an encoder 810, which further comprises image compression. For instance, the color format conversion in accordance with the present invention may be included as an optional or mandatory feature within an image or video standard, such as H.264/AVC, DIRAC, JPEG2000 or their followers. It may also be a part of a proprietary video encoder. The color format deconversion parameters 321 can then be provided as a part of the encoded video stream which comprises the compressed video, information elements necessary for its decoding and the color deconversion parameters. It may may be sent either within the packets comprising the video data information or in separate packets as a side informations. Hereby, the color format deconversion parameters may be encoded further using an entropy code, such as for instance Golomb, exponential Golomb, arithmetic, Huffman, or any other entropy code. The entropy code employed may correspond to the entropy code code used for encoding the video data and/or information elements related to the video data. It may also be an entropy code designed specially for the color deconversion parameters and adapted on their statistics.

Correspondingly, the color format deconversion 330 together with an image decompression 850 are parts of a decoder 860. The color format deconversion parameters are obtained together with the image/video data from the channel, corresponding to the above described encoder either as a part of video stream or as a separate side information. They are further entropy decoded and provided to the color format deconversion 330 together with the image 312, obtained from the channel 140 and decompressed 850. The decompression can be performed in accordance with the standardized or proprietary video or image decoders or their followers. In particular, the decoder can be H.264/AVC, DIRAC, JPEG2000.

Here, the color format conversion and deconversion may work in accordance with any of the previously described examples, it may comprise color space conversion and/or interpolation filtering estimation.

In accordance with another embodiment of the present invention and according to Figure 8, the color format deconversion coefficients 321 are transmitted over the channel 140 and, in addition, provided to the video data compression 830. Similarly, at the receiver side, the color format deconversion coefficients 322 obtained from the channel 140 are provided to the color format deconversion 330 and, in addition, to the video data decompression 850. This feature, namely providing the color format deconversion coefficients to the encoder and/or to the decoder, may obviously be applied to any of the previous examples illustrated in Figures 3, 4, 6, and 7 and to any other embodiments of the present invention. Providing the color format deconversion coefficients 321 to the video compression 830 is particularly advantageous if the compression 830 employs temporal prediction. For instance, if the color space changes within the same group of pictures in such a manner that a predicted frame has a color space different from the color space of its reference frame, it is necessary to perform a color space conversion and deconversion at the encoder in order to facilitate the prediction. In order to do that, the color format deconversion parameters are necessary.

Similarly, at the decoder side, in order to decode a video stream encoded using temporal prediction and changing color format within a group of pictures, the color format deconversion parameters 322 have to be provided to the decompression 850 as well.

The above-described configurations can be applied to different parts of an image or video data. For instance, the color format deconversion coefficients may be determined for a portion of image or video, which may be a macroblock, a group of macroblocks, a slice, a field, a picture, a group of pictures, etc. The smaller the portion for which the coefficients are determined, the better adapted are the conversion and deconversion on the input image and on each other. However, transmitting the color format coefficients requires rate increasing and thus, possibly, an optimum can be found for the size of the video portion for which the coefficients remain unchanged. The optimum may also depend on the application and on the encoding settings. The portion for which the coefficients are determined can be fixed or variable. For instance, the color format deconversion coefficients may be sent if necessary, i.e. after a change of the image/video content that would benefit from a different color space and/or interpolation.

Determining and/or providing of the color format deconversion coefficients does not necessarily need to be with the same frequency for the color space coefficients and for the interpolation filter coefficients. In situations in which the color space remains the same over a portion of a video, e.g. for a group of pictures, it may be still beneficial to transmit parameters for the interpolation and upsampling for smaller portions.

In the case of predictive video coding (e.g. as used in H.264/AVC), the reference pictures used for the prediction of the current picture may be converted in the same color space as the current picture for the prediction purpose.

In the case of a coding scheme using an H.264/AVC encoder and decoder, the color format conversion coefficients may be transmitted using a so-called SEI (Supplemental Enhancement Information) message of the H.264/AVC standard.

In the case that the sampling grid of the camera on the CCD/CMOS is not a regular 4:4:4 sampling grid, e.g. a sampling grid according to a Bayer Pattern, the RGB samples at these positions could also be used for the estimation of the color format conversion coefficients. Information about the original sampling grid of the RGB signal in the camera can be also encoded and transmitted to the receiver. Hereby, it is possible to encode and transmit an indicator which indicates one sampling grid out of several predefined sampling grids. It is also possible to code and transmit the full information about the sampling grid. This is useful in situations in which the sampling grid is not predefined.

Moreover, a color space transformation may be performed from a first color space to a second color space, while the color format deconversion coefficients are determined for an inverse color space transformation from the second color space to a third color space. This may be of advantage if a display uses a different color space than that of the color format conversion input data.

The examples described above describe transmitting and receiving of the image or video data. However, in all these examples, storing and retrieving may equally be referred to. In such case, the channel 140 is a storage medium, such as hard disk, optical or magnetic media, flash memories such as USB sticks, etc.

**Claims**

1. A method for color format conversion converting a color image (111) from a first color format into a second color format, **characterized by** the steps of:

   determining (320) color format deconversion coefficients (321) for use in the deconversion operation (330) of the color image (312) from the second color format into the first color format; and
   providing the converted image data (311) in the second color format together with the determined deconversion coefficients (321).

2. A method for color format conversion according to claim 1, wherein the determining step further performs:

   estimating (440) of the color format deconversion coefficients (321) based on the properties of the applied conversion operation and/or on the properties of the image to be converted (111).

3. A method for color format conversion according to claim 1 or 2, wherein the color format conversion (410) transforms the color space of the color image (111) from a first color space to a second color space;

4. A method for color format conversion according to any of claims 1 to 3, wherein the color format conversion (420) subsamples the color image in the first color format (111) or in the second color space format (411), the subsampled color image (421) having less samples than the input color image.

5. A method for image encoding comprising the steps of:

   color format conversion (310) according to any of claims 1 to 4; and
   compressing (830) the image (311) after the color format conversion.

6. A method for color format deconversion deconverting a converted color image (312) from a second color space into a first color space, **characterized by**
   obtaining color format deconversion coefficients (322) together with the converted image (312) in the second color format; and
   in that the converted color image (312) in the second color format is deconverted into the first color format employing the obtained color format deconversion coefficients (322).

7. A method for color format deconversion according to claim 6, wherein the deconverting step (330) transforms the color space of the converted color image (312) from a second color space to a first color space.

8. A method for color format deconversion according to claim 6 or 7, wherein the color format deconversion (680) upsamples the converted color image, the upsampled image having more samples than the input converted color image, wherein the upsampling step (680) performs interpolation filtering, the interpolation filter coefficients (604) being obtained within the color format deconversion coefficients (602).

**9.** A method for image decoding comprising the steps of:

    decompressing (850) the obtained image (141); and
    color format deconversion (330) of the decompressed image (312) according to any of claims 6 to 8.

**10.** A computer program product comprising a computer readable medium having computer readable program code embodied thereon, the program code being adapted to carry out all steps of any of claims 1 to 9

**11.** A color format converter for converting a color image from a first color format into a second color format, **characterized by**
    a determining unit (320) for determining color format deconversion coefficients (321) for use in the deconversion operation (330) of the color image from the second color format into the first color format; and
    in that the color format converter (310) is capable of providing the converted image data (311) in the second color format together with the determined color format deconversion coefficients (321).

**12.** A color format converter according to claim 11, wherein the determining unit further comprises:

    an deconversion estimator (440) for estimating the color format deconversion coefficients based on the applied conversion operation and/or on the properties of the color image (111) to be converted.

**13.** A color format converter according to claim 11 or 12 comprising:

    a color space transformation unit (410) for transforming the color space of the color image from a first color space to a second color space.

**14.** A color format converter according to any of claims 11 to 13 further comprising subsampling unit (420) for subsampling the color image in the first color format (111) or in the second color space format (411), the subsampled color image (421) having less samples than the input color image.

**15.** An image encoder comprising:

    the color format converter (310) according to any of claims 11 to 14; and
    an image compressor (830) for compressing the image (311) after the color format conversion (310).

**16.** A color format deconverter for deconverting a converted color image (312) from a second color space into a first color space, **characterized in that**
    the color format deconverter (330) is capable of obtaining color format deconversion coefficients (322) together with the converted image (312) in the second color format; and
    the color format deconverter (330) deconverts the converted color image (312) from the second color format into the first color format employing the color format deconversion coefficients (322).

**17.** A color format deconverter according to claim 16 comprising:

    a color space transformation unit (690) for transforming the color space of the color image from a second color space to a first color space.

**18.** A color format deconverter according to claim 16 or 17 comprising:

    an upsampling unit (680) for upsampling the converted color image, the upsampled image having more samples than the input converted color image wherein the upsampling unit (680) is capable of performing interpolation filtering, the interpolation filter coefficients (604) being obtained within the color format deconversion coefficients (602).

**19.** An image decoder comprising:

    an image decompressor (850) for decompressing the obtained image (141); and
    the color format deconverter (330) for deconverting of the decompressed image (312) according to any of claims 16 to 18.

# Fig. 1

camera 110 → 111 → color space transform 120 → 121 → encoder 130

encoder 130 → 140 → channel

channel 140 → 150 → decoder

decoder 150 → 151 → color space inv. transform 160 → 161 → display 170

EP 2 144 432 A1

GRÜNECKER, KINKELDEY,
STOCKMAIR & SCHWANHÄUSSER

EP59543

Fig. 2

110 camera

111

120 color space transform

121

210 filtering, subsampling

201

211

130 encoder

140 channel

150 decoder

151

202

220 upsampling, interpolation

221

160 color space inv. transform

161

170 display

EP59543

GRÜNECKER, KINKELDEY,
STOCKMAIR & SCHWANHÄUSSER

# Fig. 3

EP59543

EP 2 144 432 A1

# Fig. 4A

EP 2 144 432 A1

EP59543

# Fig. 4B

EP59543

EP 2 144 432 A1

# Fig. 5

O    Samples of A as well as of R,G,and B

☐    Samples of C and S

EP 2 144 432 A1

GRÜNECKER, KINKELDEY,
STOCKMAIR & SCHWANHÄUSSER

EP59543

# Fig. 6A

EP 2 144 432 A1

EP59543

# Fig. 6B

EP59543

EP 2 144 432 A1

# Fig. 7A

EP 2 144 432 A1

EP59543

# Fig. 7B

EP59543

EP 2 144 432 A1

# Fig. 8

**Fig. 8**

- 110 camera
- 810
- 310 color format conversion
- 311
- 830 image compression
- 320 determining unit
- 321
- 140 channel
- 141
- 142
- 322
- 860
- 330 color format deconversion
- 312
- 850 image decompression
- 170 display
- 331
- 111

EP59543

GRÜNECKER, KINKELDEY,
STOCKMAIR & SCHWANHÄUSSER

EP 2 144 432 A1

**Europäisches Patentamt**
**European Patent Office**
**Office européen des brevets**

# EUROPEAN SEARCH REPORT

Application Number

EP 08 01 2330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 176 832 A (LOCKHEED CORP [US]) 30 January 2002 (2002-01-30) * paragraphs [0029], [0037], [0043] * | 1-7, 9-17,19 | INV. H04N1/64 |
| Y | | 8,18 | |
| | ----- | | |
| X | EP 1 746 839 A (THOMSON LICENSING [FR]) 24 January 2007 (2007-01-24) * paragraph [0011] * | 1,4-6, 8-11, 14-16, 18,19 | |
| Y | | 8,18 | |
| | ----- | | |
| X | VATIS Y ET AL: "Coding of coefficients of two-dimensional non-separable adaptive Wiener interpolation filter" VISUAL COMMUNICATIONS AND IMAGE PROCESSING; 12-7-2005 - 15-7-2007; BEIJING,, 12 July 2005 (2005-07-12), XP030080902 * the whole document * | 1,4-6, 8-11, 14-16, 18,19 | |
| | ----- | | TECHNICAL FIELDS SEARCHED (IPC) H04N |

The present search report has been drawn up for all claims

| Place of search | Date of completion of the search | Examiner |
|---|---|---|
| The Hague | 10 December 2008 | Hardell, Alexander |

EPO FORM 1503 03.82 (P04C01)

**EP 2 144 432 A1**

## ANNEX TO THE EUROPEAN SEARCH REPORT
## ON EUROPEAN PATENT APPLICATION NO.

EP 08 01 2330

10-12-2008

| Patent document cited in search report | | Publication date | Patent family member(s) | | Publication date |
|---|---|---|---|---|---|
| EP 1176832 | A | 30-01-2002 | US | 6754383 B1 | 22-06-2004 |
| | | | US | 2004258301 A1 | 23-12-2004 |
| EP 1746839 | A | 24-01-2007 | WO | 2007009875 A2 | 25-01-2007 |

EPO FORM P0459